# EUROPÄISCHE PATENTANMELDUNG

(11) **EP 1 186 766 A2**
(43) Veröffentlichungstag der Anmeldung: **13.03.2002**
(21) Anmeldenummer: 01119963.5
(22) Anmeldetag: 18.08.2001
(51) Int. Cl.: F02F 1/38

(54) **Zylinderkopf für eine mehrzylindrige direkteinspritzende Otto-Brennkraftmaschine**

(30) Priorität: 06.09.2000 DE 10043773
(71) Anmelder: AUDI AG, 85045 Ingolstadt (DE)
(72) Erfinder: Diel, Hartmut, 74172 Neckarsulm (DE); Lohmann, Roland, 74172 Neckarsulm (DE); Wagner, Holger, 75031 Eppingen-Rohrbach (DE)

(57) **Zusammenfassung**

Insbesondere für Hochleistungsmotoren wird ein Zylinderkopf vorgeschlagen, der pro Zylinder ein Einlassventil 2, ein Auslassventil 3, eine erste Aufnahme 7a sowie eine zweite Aufnahme 7b für jeweils eine Zündeinrichtung 8a, 8b, für eine Zündeinrichtung 8a, 8b und eine Einspritzeinrichtung 9a, 9b oder für jeweils eine Einspritzeinrichtung 9a, 9b, und eine dritte Aufnahme 7c für eine Einspritzeinrichtung 9c oder eine Zündeinrichtung 8c aufweist, wobei das Einlassventil 2 und das Auslassventil 3 über gleich ausgebildete Ventilbetätigungselemente 4a, 4b, 4a', 4b' von einer gemeinsamen, gegenüber der Zylindermittelebene M versetzt angeordneten Nockenwelle 5 betätigt werden und die erste Aufnahme 7a im wesentlichen parallel zu dem Einlassventil 2 angeordnet ist und die zweite Aufnahme 7b im wesentlichen parallel zu dem Auslassventil 3 angeordnet ist. Vorschlagsgemäß wird eine optimierte Gemischaufbereitung erreicht und gleichzeitig ein besonders leichter, kompakter und montagefreundlicher Zylinderkopf bereitgestellt.

## Beschreibung

Die vorliegende Erfindung betrifft einen Zylinderkopf für eine mehrzylindrige direkteinspritzende Otto-Brennkraftmaschine.

Zylinderköpfe sind in einer Vielzahl von Ausführungsformen bekannt und wurden in der Vergangenheit immer weiter entwickelt, um bei Brennkraftmaschinen eine möglichst optimale Gemischaufbereitung zu verwirklichen. Speziell an die Zylinderköpfe von Hochleistungsmotoren werden jedoch in besonderem Maße noch weitere Anforderungen, wie geringes Gewicht, hohe Kühlleistung und gute Montagefreundlichkeit gestellt.

Es ist daher Aufgabe der vorliegenden Erfindung, einen Zylinderkopf für eine mehrzylindrige direkteinspritzende Otto-Brennkraftmaschine bereitzustellen, der sich durch eine günstige Gemischaufbereitung, geringes Gewicht sowie hohe Montagefreundlichkeit auszeichnet und daher auch für Hochleistungsmotoren geeignet ist.

Gelöst wird diese Aufgabe, indem der Zylinderkopf pro Zylinder ein Einlassventil, ein Auslassventil, eine erste Aufnahme sowie eine zweite Aufnahme für jeweils eine Zündeinrichtung, für eine Zündeinrichtung und eine Einspritzeinrichtung oder für jeweils eine Einspritzeinrichtung, und eine dritte Aufnahme für eine Einspritzeinrichtung oder eine Zündeinrichtung aufweist, wobei das Einlassventil und das Auslassventil über gleich ausgebildete Ventilbetätigungselemente von einer gemeinsamen, gegenüber der Zylindermittelebene versetzt angeordneten Nockenwelle betätigt werden und die erste Aufnahme im wesentlichen parallel zu dem Einlassventil angeordnet ist und die zweite Aufnahme im wesentlichen parallel zu dem Auslassventil angeordnet ist. Erfindungsgemäß wird somit ein Zylinderkopf für eine Brennkraftmaschine bereitgestellt, der aufgrund seiner drei Aufnahmen für zwei Zündeinrichtungen und eine Einspritzeinrichtung bzw. für zwei Einspritzeinrichtungen und eine Zündeinrichtung eine Doppelzündung bzw. eine Doppeleinspritzung ermöglicht, wodurch eine optimierte Zündung bzw. Ladungsbewegung und somit eine verbesserte Gemischaufbereitung erreicht wird. Zudem stellt dieser Zylinderkopf aufgrund seiner nur zwei Gaswechselventile pro Zylinder und seiner für die Gaswechselventile gemeinsamen Nockenwelle eine gewichtsparende sowie eine kompakte Anordnung dar. Durch die als Gleichteile ausgebildeten Ventilbetätigungselemente ist dieser Zylinderkopf außerdem sehr montagefreundlich, weil die Gefahr einer Vertauschung ausgeschlossen ist. Und durch den Versatz der Nockenwelle kann erfindungsgemäß trotz der unterschiedlich großen Gaswechselventile sowohl auf der Einlass- wie auch auf der Auslassseite des Zylinderkopfes gleichermaßen gut gearbeitet werden.

Vorteilhaft mündet die dritte Aufnahme für die Einspritzeinrichtung seitlich benachbart zu dem Einlassventil und der ersten Aufnahme für die Zündeinrichtung in den Zylinder ein. Die Einspritzeinrichtung ist damit gegenüber dem Einlassventil und der ersten Aufnahme für die Zündeinrichtung geneigt angeordnet und weist bevorzugt einen Strahlkegel mit einem Winkel von ca. 70 Grad auf, der um ca. 58 Grad zur Horizontalen und um ca. 15 Grad zur Vertikalen geneigt ist. Natürlich sind hierbei jedoch auch andere Winkel möglich.

Gemäß einer ersten Alternative der Erfindung sind die Ventilbetätigungselemente als Schlepphebel ausgebildet, die auf einer unterhalb und parallel zu der Nockenwelle angeordneten Schlepphebelwelle gelagert sind. Dadurch wird im Zylinder nur wenig Bauraum für den Hebelraum benötigt und kann der Zylinderkopf äußerst flach bauend ausgeführt werden.

Gemäß einer zweiten Alternative der Erfindung sind die Ventilbetätigungselemente als Kipphebel ausgeführt, die auf zwei oberhalb und parallel zu der Nockenwelle angeordneten Kipphebelwellen gelagert sind. Dadurch ist der Hebelraum innerhalb des Zylinderkopfes leicht zugänglich und daher sehr montagefreundlich gestaltet.

Die vorliegende Erfindung wird unter Bezugnahme auf die nachfolgenden Zeichnungsfiguren näher erläutert. Es zeigen:
- Figur 1a: eine Prinzipdarstellung einer ersten Alternative des Zylinderkopfes in einer Seitenansicht in Richtung der Nockenwellenachse;
- Figur 1b: ein Zylinderkopfabschnitt gemäß Figur 1a in einer Draufsicht in Richtung der Zylinderachse;
- Figur 1c: ein Zylinderkopfabschnitt gemäß Figur 1a in einer perspektivischen Ansicht;
- Figur 2a: eine Prinzipdarstellung einer zweiten Alternative des Zylinderkopfes in einer Seitenansicht in Richtung der Nockenwellenachse;
- Figur 2b: ein Zylinderkopfabschnitt gemäß Figur 2a in einer Draufsicht in Richtung der Zylinderachse; und
- Figur 2c: ein Zylinderkopfabschnitt gemäß Figur 2a in einer perspektivischen Ansicht.

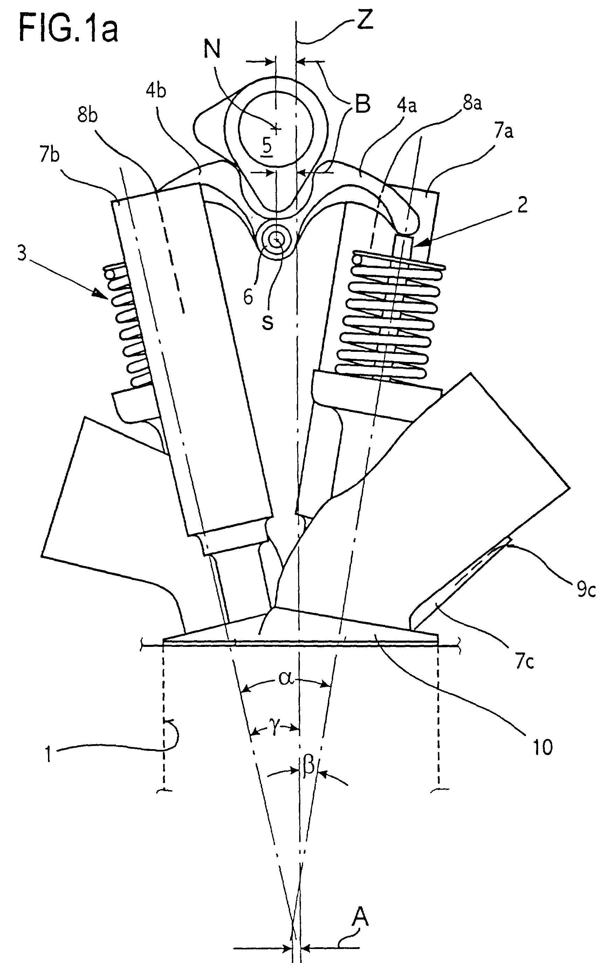

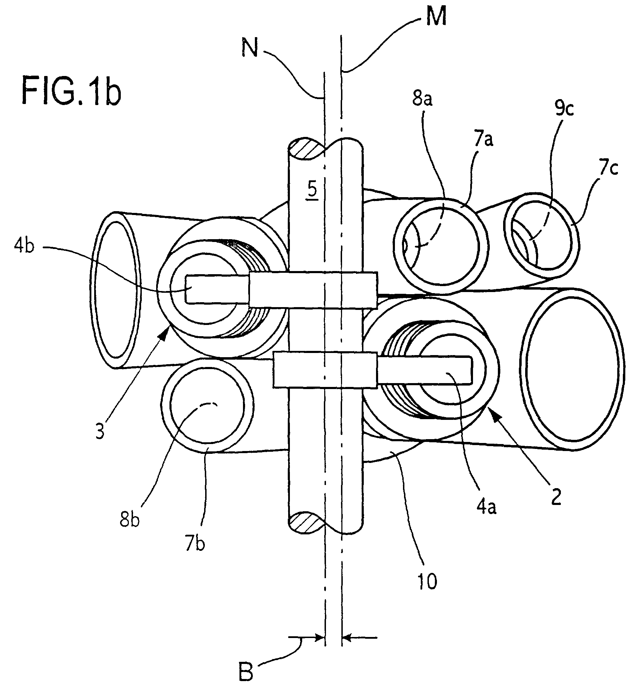

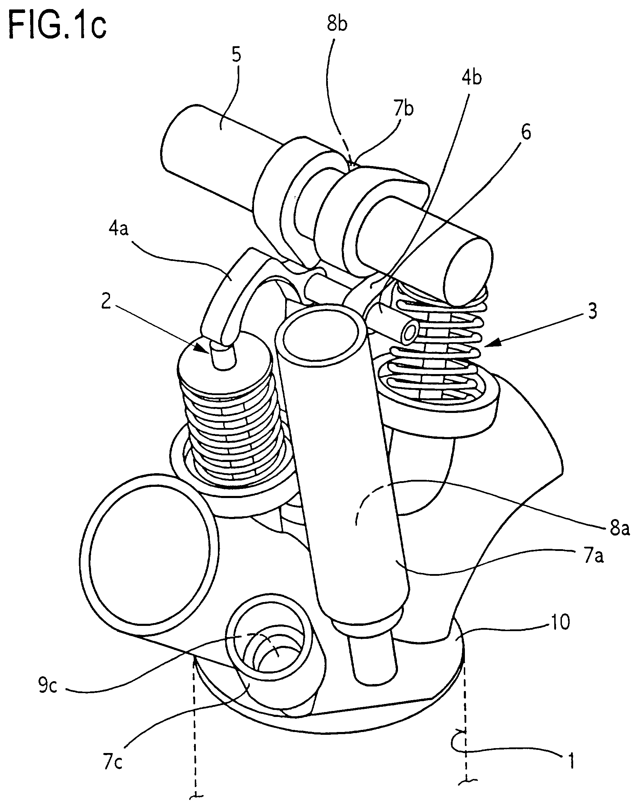

Der Zylinderkopf aus den Figuren 1a bis 1c weist pro gezeigtem Abschnitt bzw. pro Zylinder 1 ein Einlassventil 2 und ein Auslassventil 3 auf. Dabei sind das Einlassventil 2 und das Auslassventil 3 in einem Winkel α von ca. 22 Grad zueinander geneigt angeordnet bzw. ist das Einlassventil 2 um einen Winkel β von ca. 10 Grad und das Auslassventil 3 um einen Winkel γ von ca. 12 Grad zur Zylinderachse Z geneigt. Das Einlassventil 2 besitzt einen Ventiltellerdurchmesser von 44 mm, während das Auslassventil 3 einen etwas geringeren Ventiltellerdurchmesser von 35 mm besitzt. Dadurch bedingt, ergibt sich bei der Gestaltung des Zylinderkopfes ein Versatz der Schnittlinie der Ebene in der das Einlassventil 2 liegt und der Ebene in der das Auslassventil 3 liegt gegenüber der Zylindermittelebene M. Das Maß dieses Versatzes ist mit A bezeichnet.

Die beiden Gaswechselventile 2, 3 werden über Ventilbetätigungselemente, die als Schlepphebel 4a, 4b ausgebildet sind, von einer gemeinsamen Nockenwelle 5 betätigt, wobei die Achse N der Nockenwelle 5 aufgrund des Versatzes der Gaswechselventile 2, 3 und der gleich ausgebildeten Schlepphebel 4a, 4b ebenfalls gegenüber der Zylindermittelebene M in Richtung zur Auslassseite versetzt angeordnet ist. Die Schlepphebel 4a, 4b sind alle auf einer gemeinsamen Schlepphebelwelle 6 angeordnet, welche parallel unter der Nockenwelle 5 verläuft und deren Achse S in gleichem Maße B wie die Achse N der Nockenwelle 5 gegenüber der Zylindermittelebene M versetzt ist.

Dabei ist das Maß des Versatzes A in etwa gleich groß wie das Maß des Versatzes B.

Jeweils parallel zu dem Einlassventil 2 und zu dem Auslassventil 3 ist eine erste zylindrische Aufnahme 7a bzw. eine zweite zylindrische Aufnahme 7b für zwei Zündeinrichtungen 8a bzw. 8b vorgesehen, wobei diese Aufnahmen 7a, 7b genau wie die Gaswechselventile 2, 3 bezüglich der Zylindermittelebene M versetzt angeordnet sind. Die erste Aufnahme 7a und die zweite Aufnahme 7b könnten jedoch auch unter einem Winkel von bis zu +/- 10 Grad zum Einlassventil bzw. zum Auslassventil angeordnet sein. Schließlich ist noch eine dritte Aufnahme 7c für eine Einspritzeinrichtung 9c vorgesehen, die im Randbereich der Brennraumkuppel 10 benachbart zu dem Einlassventil 2 und zu der ersten Zündeinrichtung 8a in den Zylinder 1 einmündet.

Die erste Aufnahme 7a und die zweite Aufnahme 7b können gemäß anderen - nicht dargestellten - Alternativen jedoch auch für eine Zündeinrichtung 8a, 8b und eine Einspritzeinrichtung 9a, 9b oder für zwei Einspritzeinrichtungen 9a, 9b vorgesehen sein, während die dritte Aufnahme 7c auch für eine Zündeinrichtung 8c vorgesehen sein kann.

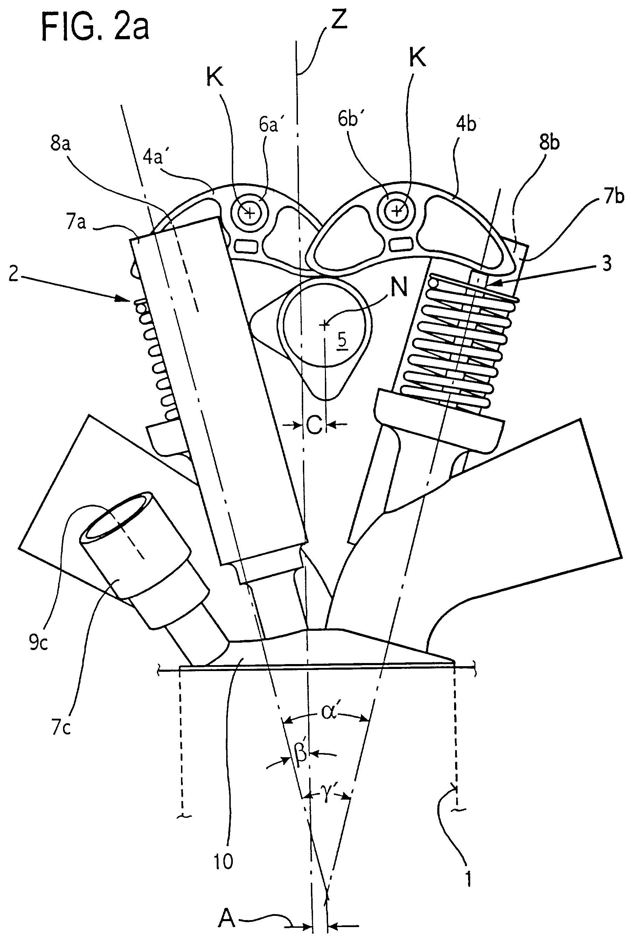

Die in den Figuren 2a bis 2c gezeigte zweite Alternative des Zylinderkopfes weist wie die erste Alternative aus den Figuren 1a bis 1c eine erste Aufnahme 7a und eine zweite Aufnahme 7b für jeweils eine Zündeinrichtung 8a, 8b sowie eine dritte Aufnahme 7c für eine Einspritzeinrichtung 9c auf.

Bei diesem Zylinderkopf werden die Gaswechselventile 2, 3 anstelle von Schlepphebeln 4a, 4b jedoch über Kipphebel 4a', 4b' betätigt, wobei die Kipphebel 4a, 4b' für die Gaswechselventile 2, 3 jeweils identisch ausgebildet sind. Die Kipphebel 4a' für die Einlassventile 2 sind dort auf einer ersten Kipphebelwelle 6a' gelagert, während die Kipphebel 4b' für die Auslassventile 3 dort auf einer zweiten Kipphebelwelle 6b' gelagert sind. Beide Kipphebelwellen 6a', 6b' sind parallel oberhalb der Nockenwelle 5 angeordnet und die Mitte ihrer beiden Achsen K ist wie die Achse N der Nockenwelle 5 um das Maß C gegenüber der Zylindermittelebene M versetzt.

Gegenüber der ersten Alternative aus den Figuren 1a bis 1c sind das Einlassventil 2 und das Auslassventil 3 jeweils in einem Winkel α' von ca. 30 Grad zueinander geneigt angeordnet, und ist das Einlassventil 2 um einen Winkel β' von ca. 15 Grad und das Auslassventil 3 um einen Winkel γ' von ca. 16 Grad zur Zylinderachse Z geneigt. Außerdem besitzen das Einlassventil 2 und das Auslassventil 3 dort jeweils einen geringfügig größeren Ventitellerdurchmesser.

## Patentansprüche

1. Zylinderkopf für eine mehrzylindrige direkteinspritzende Otto-Brennkraftmaschine, der pro Zylinder (1)
- ein Einlassventil (2),
- ein Auslassventil (3),
- eine erste Aufnahme (7a) sowie eine zweite Aufnahme (7b) für jeweils eine Zündeinrichtung (8a, 8b), eine Zündeinrichtung (8a, 8b) und eine Einspritzeinrichtung (9a, 9b) oder jeweils eine Einspritzeinrichtung (9a, 9b), und
- eine dritte Aufnahme (7c) für eine Einspritzeinrichtung (9c) oder für eine Zündeinrichtung (8c) aufweist, wobei das Einlassventil (2) und das Auslassventil (3) über gleich ausgebildete Ventilbetätigungselemente (4a, 4b, 4a', 4b') von einer gemeinsamen, gegenüber der Zylindermittelebene (M) versetzt angeordneten Nockenwelle (5) betätigt werden und die erste Aufnahme (7a) im wesentlichen parallel zu dem Einlassventil (2) angeordnet ist und die zweite Aufnahme (7b) im wesentlichen parallel zu dem Auslassventil (3) angeordnet ist.

2. Zylinderkopf nach Anspruch 1, **dadurch gekennzeichnet, dass** die dritte Aufnahme (7c) für die Einspritzeinrichtung (9c) seitlich benachbart zu dem Einlassventil (2) und der ersten Aufnahme (7a) für die Zündeinrichtung (8a) in den Zylinder (1) einmündet.

3. Zylinderkopf nach Anspruch 1 oder 2, **dadurch gekennzeichnet, dass** die Ventilbetätigungselemente Schlepphebel (4a, 4b) sind, die auf einer unterhalb und parallel zu der Nockenwelle (5) angeordneten Schlepphebelwelle (6) gelagert sind.

4. Zylinderkopf nach Anspruch 1 oder 2, **dadurch gekennzeichnet, dass** die Ventilbetätigungselemente Kipphebel (4a', 4b') sind, die auf zwei oberhalb und parallel zu der Nockenwelle (5) angeordneten Kipphebelwellen (6a', 6b') gelagert sind.
